(19) Europäisches Patentamt
European Patent Office
Office européen des brevets

(11) Publication number: 0 145 250
A1

(12) EUROPEAN PATENT APPLICATION

(21) Application number: 84307603.5

(22) Date of filing: 05.11.84

(51) Int. Cl.[4]: C 08 J 9/08
C 08 J 9/02, C 08 G 18/14

(30) Priority: 05.11.83 GB 8329628

(43) Date of publication of application:
19.06.85 Bulletin 85/25

(84) Designated Contracting States:
AT BE CH DE FR GB IT LI LU NL SE

(71) Applicant: Flexible Foam Research Limited
90/91 Tottenham Court Road
London W1P 0BR(GB)

(72) Inventor: Willoughby, Bryan Godfrey
25 Coppice Drive
High Ercall Telford Shropshire(GB)

(74) Representative: Gore, Peter Manson et al,
W.P. THOMPSON & CO. Coopers Building Church Street
Liverpool L1 3AB(GB)

(54) **Improvements in polyurethanes.**

(57) The invention provides a process for making a cellular polymer, especially a polyurethane foam, which comprises incorporating a gaseous blowing agent, such as carbon dioxide, or a precursor thereof, such as an adduct of the blowing agent with a hydroxy compound or an amine, into a liquid phase comprising a polymer for polyurethane formation, such as a polyether polyol or polyester polyol, thereafter mixing and reacting the polymer with an isocyanate and releasing the gaseous blowing agent in the resultant mixture of polymer and isocyanate during reaction of the polymer and isocyanate whereby a foamed polyurethane is formed.

The liquid phase may comprise a liquid polymer in admixture with water or a halocarbon. The gaseous blowing agent may be dissolved in the liquid phase and may be retained therein by the application of pressure. The gaseous blowing agent may be released in the reaction mixture by raising the temperature of or lowering the pressure on the gas. The precursor of the blowing agent may be formed in situ in the liquid phase comprising the polymer or may be added as such to the liquid phase. The blowing agent may be released from the precursor by destabilizing the precursor. The liquid phase may also contain a catalyst for the reaction.

EP 0 145 250 A1

/ 039 019 EP
0145250

DESCRIPTION

"IMPROVEMENTS IN POLYURETHANES"

This invention relates to the production of polyurethane foams by processes which offer significant improvements over commonly used methods; such improvements being by virtue of their convenience and by the use of smaller quantities of certain costly and toxic (or environmentally unacceptable) ingredients.

The opportunities for improvements in polyurethane manufacturing, and to some extent the means by which such improvements might be affected, can be seen by reference to the existing technology and the problems associated with it.

The production of polyurethane foam raises numerous technical, economic and environmental problems. For example amongst the principal raw materials are organic isocyanates which are both expensive and toxic. Indeed the need to handle safely substantial quantities of such toxic isocyanates places severe constraints on the operating practices within the polyurethane manufacturing industry. By comparison the primary blowing agent most commonly used is carbon dioxide, a material which is both inexpensive and of low toxicity. However this carbon dioxide is generated by a chemical reaction of the isocyanate, namely hydrolysis:

$$RNCO + H_2O \longrightarrow RNH_2 + CO_2$$

Consequently the use of this source of carbon dioxide requires that larger amounts of isocyanate are used than would be required for non-cellular products. Of course the use of secondary blowing (e.g. chlorofluorocarbons) is commonplace but these may introduce their own problems with regard to cost and environmental hazard.

The fact that the use of isocyanates in blowing is extravagant can be illustrated by reference to the processes of their manufacture. For example it is well known that isocyanates such as TDI (tolylene diisocyanate) are obtained by derivatisation of an appropriate amino compound, e.g.:

$$RNH_2 + COCl_2 \longrightarrow RNCO + 2HCl$$

using phosgene which is commonly obtained from oxides of carbon. Thus a scheme can be presented to show that the carbon dioxide used to blow the polyurethane is actually derived from carbon dioxide, but using a multi-stage sequence of chemical changes, e.g.:

$$CO_2 \xrightarrow{C} CO \xrightarrow{Cl_2} COCl_2$$

$$COCl_2 \xrightarrow[\text{(ii) } H_2O \text{ (isocyanate hydrolysis)}]{\text{(i) } ArNH_2 \text{ (isocyanate synthesis)}} CO_2 + 2HCl$$

Chlorine is consumed by this synthesis but is subsequently wasted as hydrogen chloride, a byproduct which plays no part in the polyurethane product. The opportunities for cost saving are self evident and consequently much interest has already been directed to the use of alternative schemes for carbon dioxide or for other gas production; schemes which can replace or partially replace the above sequence of reactions.

However such alternatives have seen little commercial success owing to a variety of technical constraints. Amongst these are the need to produce large quantities of such gas, as would be necessary for the production of low density foam, and the need to release that gas in a progressive manner whilst reactions are proceeding to produce polyurethanes.

An object of this present invention is to produce an alternative scheme for releasing gas into the polyurethane-forming reaction mixture in such a way that useful polyurethane foams can be obtained using substantially familiar technology and equipment. In this manner worthwhile reductions in isocyanate usage can be achieved to the consequential benefit of reduced raw materials costs and, perhaps, reduced vapour hazard. Additionally reductions in the usage of secondary blowing agents (e.g. chlorofluorocarbons) also become accessible. Furthermore it will be seen that the processes of this invention can have benefits additional to those of economy and hazard reduction. In the description of this invention the the term 'gas' is used to include any material in the gaseous phase (i.e. a gas or a vapour) and consequently is not restricted to permanent gases.

According to this invention established blowing agents for polyurethanes are supplemented or replaced by a gas generated from an alternative source. This invention provides the means for incorporating the supplementary or replacement blowing agent, or a precursor thereof, into the mix and the means for releasing the required gas during polyurethane formation. The incorporation and release may be considered as two separate stages of the invention. In the preferred form of this invention the supplementary gas is carbon dioxide.

The first stage of this invention is a process for producing a reactant mixture for polyurethane foam production whereby a portion of that mixture is treated with the supplementary or replacement gas prior to the incorporation, into the mixture, of the isocyanates. This treatment may be carried out in either or both of two ways:

(1) dissolving the gas in a portion of that reactant mixture by treating a mix containing at least a liquid polymer and a low molecular weight fluid (such as a chlorofluorocarbon or water) with the gas; and preferably dissolving the gas under pressure. The term 'liquid polymer' refers to any low molecular weight polymer used in polyurethane production which may be liquid or capable of being handled as a liquid. For example such polymers include polyether diols and triols and polyester diols.

(2) reacting the gas in a portion of that reactant mixture containing species of functionality suitable for forming adducts with the gas; the gas being reacted under conditions which promote adduct formation.

One example of such reaction products are the adducts of carbon dioxide with hydroxyl-containing species, such as carbonic acid or derivatives thereof. The conditions which enhance such adduct formation include the control of pH, temperature or carbon dioxide pressure. For example at atmospheric pressure the conditions governing the stability of the free carbonic acid or its derivatives may be summarised by equilibria such as:

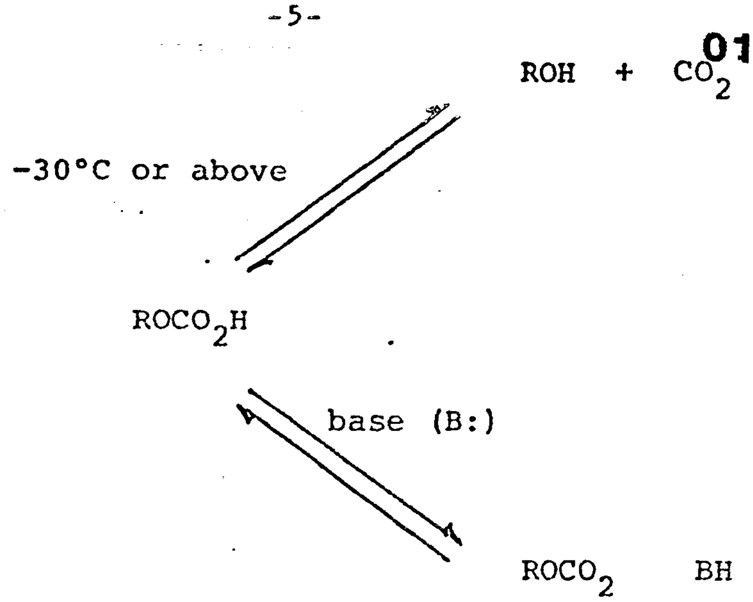


Such equilibria, and the enhancement of adduct (i.e. acid) formation by the use of high pressures are well recognised for carbon dioxide in water. That they apply also to systems involving carbon dioxide and low molecular weight alcohols has also been demonstrated, but we have now shown (Example 1) that such equilibria also apply to the appropriate functional groups on a liquid polyether, e.g.:

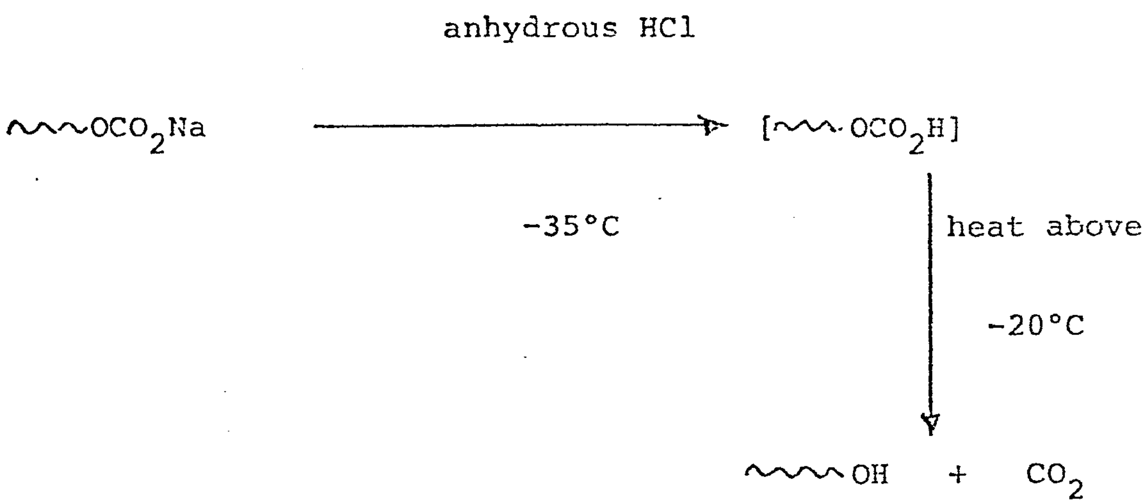


Although much of the basic chemistry of these functional groups is well known, the exploitation of the above reactions for blowing polyurethanes is novel, and is

fundamental to the fullest exploitation of this invention for supplementary or replacement carbon dioxide production in polyurethane foam manufacture. Of particular value are those processes where the ingredients used in polyurethane formation can be used in specific combinations so that direct carbonation can be achieved under conveniently obtainable conditions, as is the case with mixtures containing both water and tertiary amine as used to catalyse the isocyanate - water reaction, e.g.:

$$H_2O + CO_2 + Me_2NC_2H_4OH \longrightarrow HOCO_2^{\ominus} \; Me_2\overset{\oplus}{N}HC_2H_4OH$$

Other examples of adducts which could be formed include: adducts of carbon dioxide with certain amines (for example carbamic acid derivatives), and losely bonded adducts of gases with water, known as gas hydrates.

However the means of incorporating a supplementary or replacement blowing agent into the polyurethane is only one aspect of this present invention. Of equal importance is the means by which the supplementary or replacement gas may be released into the reacting mixture during polyurethane foam manufacture.

To this end dissolved gases may be released for foaming by the effects of pressure or temperature, where lowering the pressure or increasing the temperature will release the dissolved gas. The increase in temperature may be conveniently obtained by the exotherm of the isocyanate/hydroxyl reaction. In one preferred form of this process the foaming is conducted in an open vessel (i.e. at nominally atmospheric pressure) and the reaction mixture is discharged into this vessel from a pressurised system.

Ideally the pressure should be released gradually whilst polyurethane formation is occurring and this may be conveniently obtained by allowing the fully formulated and reacting mixture to pass through a pipe prior to the discharge into the vessel for foaming. However the release of some gas early in the polyurethane forming process is not necessarily a disadvantage since this release assists in nucleation of gas bubbles and facilitates production of a more uniform foam.

Gaseous species which have been retained by adduct formation may be released by creating those conditions which destabilise the adduct. Ideally such conditions should be those commonly used in polyurethane production. Clearly thermally unstable adducts can be decomposed by raising the temperature of the mix as may be conveniently obtained in the exothermic processes of polyurethane foam production. More particularly adducts of water and ionic adducts which are stabilised by water, may be destabilised by their exposure to isocyanates. The manner by which this may be achieved depends on the stability of the adduct. For example it may be achieved by discharging from a pressurised system, in the manner described above, where in this case the applied pressure serves to suppress decomposition of the adduct prior to foaming. Thus when adopting the procedure described above the adduct would be formed in situ and need not be subsequently isolated.

Alternatively some adducts may have sufficient stability to be storable at atmospheric pressure and may even be handled in isolated form. Another preferred form of this invention uses an adduct of this type and adds the adduct, or a blend containing the adduct, to the polyol or polyol mix. Thus in the latter form neither the polyol nor polyol mix are the subject of a direct gasefication stage. It will be recognised that the adduct may also function in a catalytic role, but when used to assist blowing this adduct

is incorporated in amounts larger than conventionally used in catalysis.

In view of the processes used for supplementary or replacement gas formation it will be recognised that this invention is widely applicable in polyurethane manufacture. For example it is applicable to the production of cellular or foamed polyurethane products or composite products containing such materials. No restriction is seen in the type of such products, which may be low or high density and flexible or rigid. It will be apparent then that this invention is applicable to furniture, cushioning, carpeting and materials for insulation and for sound and energy absorption; and indeed any products where cellular or foamed polyurethanes have been or may be used. While the invention is particularly suited to polyurethane foam manufacture it will be appreciated that it is also applicable to other polymer systems which can usefully exploit these processes.

This invention will now be further illustrated by means of the following examples. Dissolution of the gas in a suitable blend of polyurethane ingredients may be illustrated with respect to carbon dioxide. This gas is preferably introduced under pressure, the upper limit of which will be determined by the equipment in use. For minimal changes to conventional polyurethane foaming plant the introduction of carbon dioxide into the mix can be carried out in a tank similar to that used for liquid polymer storage. However any system for dissolving volatile materials, in the gaseous or condensed phases, may be used. The important feature in this case is that the mix to dissolve the gas must contain the liquid polymer (e.g. polyether triol) and at least one low molecular weight fluid to assist dissolution. In Example 2 the mix contains a polyether triol, a chlorofluorocarbon and water (together

with surfactant and a typical catalyst for polyurethane foam formation). In this example the carbon dioxide was dissolved under pressure at ambient temperature and regenerated as a gas when the pressure was released.

It is possible that both chemical and physical effects may occur when suitable mixes are treated with a gas under pressure. In particular, there is the role that temperature may play in enhancing dissolution and stabilising intermediate adducts. These effects may be seen in Example 3 where a given mixture of a polyether triol, water and a chlorofluorocarbon was treated with carbon dioxide at various sub-ambient temperatures. It is noteworthy that the highest yields of gas are obtained when carbon dioxide dissolution is carried out at the highest temperature at which intermediate adducts ($CO_2$ + HO-) would be stable; an effect which supports the view that adducts are formed. In this case the presence of water is critical to the production of such a high yield of gas, and thus it is possible that, the proposed intermediate is either carbonic acid or a hydrated carbonic acid derivative.

The control of pH can be used to deliberately enhance such adduct formation, thereby increasing the amount of gas which may be incorporated into the mix and providing adducts of such stability that direct evidence of their existence can be obtained. In Example 4 it is shown how an amine catalyst, typical of those used in polyurethane manufacture, can be incorporated in the mix to be carbonated in order to provide suitable pH control. In this case a mixture of dimethylethanolamine and water, with or without polyether triols is carbonated to give a product which is stable at room temperature and can be analysed by infra-red spectroscopy; the carbonated solution showing a characteristic carboxylate infra-red absorption doublet at 1650 and 1625 $cm^{-1}$.

This solution effervesces releasing carbon dioxide when acidified (when the carboxylate absorption will then disappear from the infra-red spectrum of the mix). Moreover, when an analogous mix is carbonated and incorporated into a polyurethane generating formulation, a higher level of expansion is obtained than when using an equivalent quantity of an uncarbonated mix in this same manner (Example 4). Furthermore the polyurethane product from this carbonated formulation releases negligible gas when subsequently treated with acid indicating the decomposition of the carboxylate during the production of the polyurethane foam.

It is noteworthy in Example 4 that the amine used has a high solubility in water. Such solubility is seen to be of advantage in direct carbonation of polyol/water/amine blends if formation of the intermediate carboxylate is to be encouraged. Such benefits can be seen in Example 5, where amines having high solubility (alkylethanolamines) and low solubility (N-ethylmorpholine and N,N-dimethylbenzylamine) in water are compared. The presence of water-miscible amines in the polyol-water mix provided for detectable amounts of carboxylate after carbonation and ensured the highest yields of gas on subsequent acidification.

By exploiting the formation of a carbon dioxide adduct to increase the availability of this gas during a subsequent reaction with an isocyanate (as in Example 4) then the use of expensive or environmentally unacceptable secondary blowing agents, such as chlorofluorocarbons, may be reduced or even eliminated. Moreover with attention to formulations this same approach may be applied to reductions in the required amount of the toxic and expensive isocyanate.

How this may be achieved is illustrated in Examples 6 and 7. Clearly it would be inappropriate to attempt to achieve this by introducing into the foaming formulation an

adduct stabilised by a large amount of a tertiary amine bearing active hydrogen atoms (e.g. derivatives of ethanolamine) as these groups would also consume isocyanate and consequentially increase the amount of isocyanate required. In Example 6, dimethylethanolamine is included in the formulation, but is present at more commonly encountered 'catalytic' levels. Here a mix containing only 0.4 parts of such amine per 100 parts of polyether triol, and containing also a chlorofluorocarbon, is carbonated at sub-ambient temperature and under pressure. This mix when subsequently blended with only 37.6 parts of TDI gave a soft and resilient flexible foam having a density of 24.6 kg/m³.

An alternative approach uses a tertiary amine with no active hydrogen atoms and Example 7 shows how this can be carried out using an isolatable adduct. In this case the amine, triethylamine, does not have a high solubility in water, yet an equimolar mixture of the amine and water can be caused to react with carbon dioxide to convert substantially all this liquid mix into a solid crystalline product. At ambient temperature this product slowly effervesced and reverted to a mixture of triethylamine and water; this behaviour from a system of the above stoichiometry suggesting the solid product to be triethylammonium bicarbonate. This adduct effervesced vigorously when treated with TDI, confirming the reaction implied from the observations of foaming in Example 4. Thus it will be seen that an adduct of water and carbon dioxide when decomposed by an isocyanate can release carbon dioxide from two sources: dissociation of the adduct, and reaction of the water produced with isocyanate. Therefore such an adduct becomes a very efficient blowing agent in the presence of isocyanates.

The manner by which this white solid product can be used to reduce the amount of isocyanate required for flexible foam production can be illustrated, in principle, in the formulations compared in Example 7. In these the standard isocyanate requirement is reduced by up to 40%, as the adduct is incorporated at levels of up to no more than 14 parts per 100 parts of triol. In all these formulations the volume expansion achieved on foaming was the same.

However it is recognised that reducing the isocyanate and water content of the mix, in this simple comparison, reduces the concentration of urea groups in the product polymer and impaired mechanical performance is an expected consequence. It is presumed that those skilled in the art of formulation will take account of this and take steps to compensate or provide an alternative source of urea groupings.

In the case of Mix II of Example 7 the incorporation of 3.5 parts of triethylamine adduct provides sufficient blowing to allow for a 10% reduction in isocyanate when compared with that used in Mix I. Correspondingly the incorporation of 1.75 parts of this adduct would allow for a 5% reduction in isocyanate, the savings becoming more marginal as the amount of adduct used is reduced further. If the lower molecular weight (and marginally less stable) adduct of trimethylamine, water and carbon dioxide is used in place of the above adduct of triethylamine then the amount of adduct required to provide for a 5% reduction of isocyanate is decreased from 1.75 to 1.3. Such values, which approach the lower levels for practical benefit from gas generation, are higher than those commonly encountered for catalytic additives.

Example 1

A polyoxypropylene triol of approximate molecular weight 3500 (Propylan 317; 118g, 0.10 eq) was first dried under vacuum at 100°C and then added to a solution of sodium (2.36g, 0.10 eq) in dry methanol (50 ml) and the mixture allowed to stand until a clear solution was obtained. The solution was then heated under nitrogen and, after an initial period of reflux (45 min) the mix was allowed to distil until no more methanol was obtained.

The product was a viscous liquid, similar to the original polymer but having an infra-red spectrum which showed only a weak absorption at 3500 $cm^{-1}$ indicating only traces of hydroxyl functionality remained. When exposed to carbon dioxide, this liquid gave a waxy solid in the manner of carboxylate ionomers. Alternatively the treatment with carbon dioxide can be carried out in a good solvent for the polyether such as diethyl ether or tetrahydrofuran. When carbonated in such a solution and the solvent removed under vacuum at ambient temperature the same waxy paste like product is obtained and this shows a characteristic carboxylate absorption in the infra-red at 1630 $cm^{-1}$.

A portion of this carbonated product (68g) was placed in a 1 litre round-bottomed flask which was subsequently evacuated and cooled in liquid nitrogen. Into this flask was then condensed, via vacuum transfer techniques, anhydrous hydrogen chloride (2.01g, 55.2 mmole) and the mix was allowed to warm up to ca. -30°C by transferring the flask and its contents to a bath of melting 1,1,1-trichloroethane. The reaction was characterised by the formation of a white precipitate, but by no effervescence. However when allowed to warm to above -20°C the product effervesced to give a gas identified by classical techniques as carbon dioxide. When the effervescence had ceased the product mixture was digested in a suitable solvent (trichlorofluoromethane in

this case) filtered and the solvent evaporated off. The product obtained was a colourless liquid which gave an infra-red spectrum indistinguishable from that of the original polyol and a white solid shown by classical chemical analysis to be substantially sodium chloride (2.76g, 47.2 mmole).

Example 2

A mix of the following composition was prepared:

| | Wt. used | Parts by Wt. conventional display |
|---|---|---|
| Polyoxypropylene triol (MW 3500) | 22 kg | 100 |
| Water | 0.59 kg | 2.7 |
| Trichlorofluoromethane | 2.2 kg | 10 |
| Silicone surfactant, BF 2270 | 0.22 kg | 1.0 |
| Dimethylethanolamine | 0.09 kg | 0.4 |

This was made up in a steel vessel (45 cm x 60 cm dia.) equipped with a stirrer and gas inlet tubes. The lid incorporated an 'O' ring to provide a pressure tight seal when the lid was clamped onto the vessel. Once sealed in this manner the vessel and its contents were pressurised to 80 psi with carbon dioxide via the gas inlet tubes which discharged well below the surface of the liquid mix, close to the bottom of the vessel. The mix was stirred for 30 minutes and when the liquid was subsequently discharged (via an exit pipe which incorporated a stopcock) into an open vessel a significant expansion of the mix was observed, to give a liquid foam with a specific volume of 6.0 ml/g.

Example 3

A mix of the following composition was prepared:

| | Parts by weight |
|---|---|
| Polyoxypropylene triol (MW 3500) | 100 |
| Water | 2.1 |
| Trichlorofluoromethane | 30 |

A portion of this mixture was placed in a glass bubbler and cooled in a cryogenic bath. Carbon dioxide was then bubbled through the mix under an excess pressure (over atmospheric) of 40 mm Hg for a period of 2 hours. The mix was then allowed to warm to ambient temperature and the gas evolved collected and its volume measured. In a series of otherwise identical experiments the cryogenic baths used were: melting ice (0°C), melting ethylene glycol (-16°C), melting 1,1,1-trichloroethane (-30°C) and melting chloroform (-63°C). The yields of gas obtained are listed in the table below:

| Carbonation Temperature (°C) | Yield of gas evolved ml/g of mix |
|---|---|
| 0 | 2.0 |
| -16 | 3.7 |
| -30 | 11.3 |
| -63 | 3.7 |

Example 4

In a series of experiments, Mixtures I-III containing dimethylethanolamine and at least one other hydroxyl-containing compound were treated with carbon dioxide in an all-glass bubbler. The carbon dioxide was bubbled through each mix at ambient temperature over a period of 1 hour and under an excess pressure of 40 mmHg. In the case of Mixes I and II, the product of this treatment showed characteristic carboxylate absorptions in the infra-red at 1650 and 1625 $cm^{-1}$, whereas Mix III did not absorb in this region. On acidification Mixes I and II effervesced releasing carbon dioxide whereas Mix III did not. The results are summarised in the following table:

| Mix | I | II | III |
|---|---|---|---|
| Polyoxypropylene triol (MW 3500) | - | 22.39 g | 15.04 g |
| Dimethylethanolamine | 7.23 g | 1.68 g | 0.75 g |
| Water | 2.41 g | 0.56 g | - |
| $CO_2$ released on acidification | 760 ml | 136 ml | 0 ml |

This procedure was applied to the foaming of small beaker mixes having the formulation:

Part 1

| | |
|---|---|
| Polyoxypropylene triol (MW 3500) | 100 |
| Water | 3.5 |
| Silicone B2370 | 1.0 |
| Stannous octoate | 0.3 |
| Dimethylethanolamine | 7.0 |

Part 2

| | |
|---|---|
| Trichlorofluoromethane | 10 |
| Dichloromethane | 2.5 |

Part 3

| | |
|---|---|
| TDI | 45.3 |

Two such mixes were studied: one directly as above, and a second one in which Part 1 had been previously carbonated by bubbling carbon dioxide through it at 24°C for 1.5 hours under an excess pressure of 40 mm Hg. In the first case the product had an expanded volume of 22 ml/g, and in the second case a much larger expanded volume of 31 ml/g.

Example 5

In a series of experiments, Mixtures I-IV containing a polyoxypropylene triol, water and a tertiary amine were treated with carbon dioxide in the manner described in Example 4. Only in the cases of Mixes I and III did the product of this treatment show significant absorption of infrared in the manner characteristic of carboxylate. On acidification Mixes I and III gave the largest yield of gas. The results are summarised in the following table:

| Mix | I | II | III | IV |
|---|---|---|---|---|
| Polyoxypropylene triol (MW 3500) | 100 | 100 | 100 | 100 |
| Water | 2.5 | 2.5 | 2.5 | 2.5 |
| Dimethylethanolamine | 7.5 | - | - | - |
| Ethylmorpholine | - | 7.5 | - | - |
| Methyldiethanolamine | - | - | 7.5 | - |
| Dimethylbenzylamine | - | - | - | 7.5 |
| $CO_2$ released on acidification (ml/g of mix) | 5 | 1 | 6 | 2 |

Example 6

Using the equipment described in Example 2 a mix was carbonated having the formulation:

| | |
|---|---|
| Polyoxypropylene triol (MW 3500) | 100 |
| Water | 2.75 |
| Silicone BF 2270 | 1.0 |
| Trichlorofluoromethane | 10 |
| Stannous octoate | 0.28 |
| Dimethylethanolamine | 0.40 |

The carbon dioxide was introduced firstly by the addition of powdered solid $CO_2$ and subsequently by bubbling carbon dioxide gas through the mix over a period of approximately 1.5 hours at pressures of up to 50 psi. After carbonation the mix was allowed to attain ambient temperature whilst a pressure of 50-60 psi was maintained within the vessel. Using air pressure the mix was pumped into a high pressure mixing head and blended with TDI (37.6 parts per 100 parts of polyol). The mix then passed through a 2 m length of reinforced hose before being discharged into an open mould for foaming. The product was a flexible foam which did not shrink on storage and which possessed an average density of 24.6 kg/m³.

Example 7

A 500 ml flask containing triethyamine (18.6g, 0.18 mole) and water (3.31g, 0.18 mole) was slowly purged with carbon dioxide and then sealed placed in a liquid nitrogen (-196°C) bath. When allowed to warm slowly above 0°C a trace of white solid was observed to have formed. A repeated purge with carbon dioxide followed by a freeze (-196°C)/thaw cycle produced more of the white solid product. This purge/freeze/thaw cycle was repeated until no more white solid formed, and no significant amounts of liquid components were visible. When collected, this white solid product (13g) was found to have long-term stability at temperatures up to 15°C, but portions stored at ambient temperature (>20°C) slowly effervesced.

This white solid (hereinafter referred to as the 'triethylamine adduct') was subsequently dispersed in various polyol-containing formulations in the series of small beaker foaming mixes tabulated below. In all cases the rise achieved was the same (approx. 20x volume expansion) and solid foam products of equivalent density were initially obtained. However some contraction of the foam on standing was also observed, this being most evident in the mix of lowest water content (Mix IV).

| Mix | I | II | III | IV |
|---|---|---|---|---|
| Polyoxypropylene triol (MW 3500) | 100 | 100 | 100 | 100 |
| Water | 3.08 | 2.31 | 1.54 | - |
| Silicone B2370 | 1.0 | 1.0 | 1.0 | 1.0 |
| Dimethylethanolamine | 0.4 | - | - | - |
| Stannous octoate | 0.3 | 0.1 | 0.1 | - |
| Triethylamine adduct | - | 3.5 | 7.0 | 13.9 |
| TDI | 45.5 | 40.9 | 36.1 | 27.0 |

CLAIMS

1. A process for making a foamed or cellular polymer by the reaction of at least two reactants characterised in that it comprises mixing a blowing agent or a precursor thereof with one of the reactants, then adding the second reactant to the resultant mixture and releasing the blowing agent in the mixture while reacting the reactants, whereby a foamed or cellular polymer is formed.

2. A process for making a polyurethane foam by reaction of a polymer with an isocyanate, characterised in that it comprises incorporating a gaseous blowing agent or a precursor thereof into a liquid phase comprising a polymer for polyurethane formation, thereafter mixing and reacting the polymer with an isocyanate and releasing the gaseous blowing agent in the resultant mixture of polymer and isocyanate during reaction of the polymer and isocyanate whereby a foamed or cellular polyurethane is formed.

3. A process as claimed in claim 2 in which the gaseous blowing agent is carbon dioxide.

4. A process as claimed in claim 2 or 3 in which the gaseous blowing agent is obtained at least in part from an external source.

5. A process as claimed in any one of claims 2 to 4 in which the polymer for polyurethane formation is a hydroxy compound.

6. A process as claimed in claim 5 in which the hydroxy compound is a polyether polyol or polyester polyol.

7. A process as claimed in any one of claims 2 to 6 in which the liquid phase comprises a liquid polymer in admixture with a low molecular weight fluid.

8. A process as claimed in claim 7 in which the low molecular weight fluid is water or a halocarbon.

9. A process as claimed in claim 8 in which the halocarbon is a chlorofluorocarbon.

10. A process as claimed in any one of claims 2 to 9 in which the precursor of the blowing agent is an adduct of the gaseous blowing agent with a hydroxy compound or an amine.

11. A process as claimed in any one of claims 2 to 10 in which the gaseous blowing agent is dissolved in the liquid phase.

12. A process as claimed in any one of claims 2 to 11 in which the gaseous blowing agent is retained in the liquid phase comprising the polymer by the application of pressure.

13. A process as claimed in any one of claims 2 to 12 in which the gaseous blowing agent is released in the reaction mixture by raising the temperature of or lowering the pressure on the gas.

14. A process as claimed in any one of claims 2 to 10 in which the precursor of the blowing agent is formed in situ in the liquid phase comprising the polymer.

15. A process as claimed in any one of claims 2 to 10 in which the precursor of the blowing agent is added as such to the liquid phase comprising the polymer.

16. A process as claimed in claim 14 or 15 in which the blowing agent is released from the precursor by destabilizing the precursor.

17. A process as claimed in any one of claims 2 to 16 in which the liquid phase comprising the polymer also contains a catalyst for the reaction of the polymer with the isocyanate.

European Patent Office

# EUROPEAN SEARCH REPORT

0145250
Application number
EP 84 30 7603

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int Cl 4) |
| X | FR-A-1 220 214 (SOCIETE ANONYME DES PNEUMATIQUES DUNLOP)<br>* Page 3, column 1, paragraph 3; claims 1, 2 *<br>--- | 1-17 | C 08 J 9/08<br>C 08 J 9/02<br>C 08 G 18/14 |
| A | DE-A-1 238 205 (FARBWERKE HOECHST-AG.)<br>* Column 2, line 47 - column 3, line 3; column 1, lines 26-34; claim *<br>--- | 1 | |
| A | US-A-2 889 291 (H.R. MOORE)<br>* Column 2, lines 28-33; claim 1 *<br>--- | 1-6 | |
| A | EP-A-0 051 211 (BAYER AG.)<br>* Page 5, line 28 - page 6, line 10; page 22, lines 9-17; claims 1-9 *<br>--- | 1-17 | TECHNICAL FIELDS SEARCHED (Int. Cl 4) |
| A | VIEWEG AND HÖCHTLEN "Kunststoff-Handbuch" Vol. VII, Polyurethane, page 152 1966, CARL HANSER VERLAG, München pages 453-457<br>* Page 152, paragraph 2; page 455, paragraph 5 *<br>----- | 1-2 | C 08 J 9/02<br>C 08 J 9/08<br>C 08 G 18/14 |

The present search report has been drawn up for all claims

| Place of search | Date of completion of the search | Examiner |
|---|---|---|
| BERLIN | 22-10-1985 | BOURGONJE A.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document